# EUROPEAN PATENT APPLICATION

(11) **EP 4 290 432 A1**
(43) Date of publication of application: **13.12.2023**
(21) Application number: 22178382.2
(22) Date of filing: 10.06.2022
(51) Int. Cl.: G06Q 10/00, G01B 11/00, G05B 23/02, G01C 15/00

(54) **METHOD AND SYSTEM FOR DETERMINING A NEED FOR MAINTENANCE FOR A COORDINATE MEASURING DEVICE**

(71) Applicant: Leica Geosystems AG, 9435 Heerbrugg (CH)
(72) Inventor: STEINER, Markus, 5722 Gränichen (CH)
(74) Representative: Kaminski Harmann

(57) **Abstract**

The invention pertains to a computer-implemented method (100) for determining maintenance requirements of a first coordinate measuring device, comprising: providing (110) a digital-twin database comprising individual digital twins for each of a multitude of coordinate measuring devices, each device comprising a plurality of components, each individual digital twin comprising information about the individual components of the respective device; continuously receiving (120) usage-related data regarding a usage of the multitude of coordinate measuring devices; receiving (130) maintenance data related to maintenance events of the coordinate measuring devices; performing a maintenance analysis (140) involving the maintenance data of at least a subset of the multitude of coordinate measuring devices, the information about the components used in the coordinate measuring devices of the subset and the usage-related data of the coordinate measuring devices of the subset; and predicting (150), based on a result of the maintenance analysis, maintenance requirements for the first coordinate measuring device, wherein maintenance information is automatically provided (160) and/or a maintenance appointment is automatically scheduled (162).

## Description

The present invention pertains to a computer system and to a computer-implemented method for determining a need for maintenance for a coordinate measuring device, particularly for individual devices of a multitude of coordinate measuring devices.

Coordinate measuring devices, such as stationary coordinate measuring machines (CMM) or portable articulated arm coordinate measuring machines (AACMM) or laser-based coordinate measuring devices including laser trackers, laser scanners and total stations are used in a wide variety of applications in quality management and quality assurance. EP 2 980 526 B1 describes a laser tracker as an example of a coordinate measuring device.

To maintain a high reliability and precision of these devices, regular maintenance and service is required. It would be desirable to improve the maintenance and service - on the one hand to avoid unnecessary appointments that keep the devices from performing measurement tasks, and on the other hand to prevent unreliable measurement results or even damages to the devices.

It therefore an object of the present invention to provide an improved method and system of determining a need for maintenance for a coordinate measuring device.

It is a further object to provide such a method and system that allow determining the need for maintenance for individual devices.

It is a further object to provide such a method and system that can be used for large fleets of coordinate measuring devices.

At least one of these objects is achieved by the computer-implemented method according to claim 1, the system according to claim 14 and/or the dependent claims of the present invention.

A first aspect of the invention relates to a computer-implemented method for determining maintenance requirements of a first coordinate measuring device. The method comprises performing the following steps in a computational environment:
- providing a digital-twin database comprising individual digital twins for each of a multitude of coordinate measuring devices including the first coordinate measuring device, each coordinate measuring device comprising a plurality of components, each individual digital twin comprising information about the individual components of the respective coordinate measuring device;
- continuously receiving usage-related data regarding a usage of the multitude of coordinate measuring devices, e.g. a usage in coordinate measuring applications;
- receiving maintenance data related to maintenance events of the coordinate measuring devices;
- using one or more algorithms to perform a maintenance analysis involving the maintenance data of at least a subset of the multitude of coordinate measuring devices, the information about the components used in the coordinate measuring devices of the subset and the usage-related data of the coordinate measuring devices of the subset; and
- predicting, based on a result of the maintenance analysis, maintenance requirements for the first coordinate measuring device.

According to this aspect of the invention, the maintenance information regarding the predicted maintenance requirements is automatically provided to the first coordinate measuring device, to a mobile device of an operator assigned to the first coordinate measuring device, and/or to a maintenance service provider; and/or a maintenance appointment for the first coordinate measuring device is automatically scheduled based on the predicted maintenance requirements.

The computational environment for instance comprises one or more server computers or a cloud-computing environment and optionally may be embodied as a computer system according to the second aspect of the invention.

According to one embodiment of the method, each digital twin comprises information about specified maintenance intervals of the plurality of components of the respective coordinate measuring device, and the method further comprises generating adjusted maintenance intervals for one or more of the plurality of components of the first coordinate measuring device by adjusting the specified maintenance intervals of the respective one or more components based on the predicted maintenance requirements and/or on the result of the maintenance analysis.

In one embodiment, predicting the maintenance requirements comprises predicting maintenance events based on the adjusted maintenance intervals.

In another embodiment, generating an adjusted maintenance interval of a first component comprises adjusting, in the digital twins of all coordinate measuring devices that comprise the first component, the specified maintenance interval of the first component.

According to another embodiment, the method comprises receiving operator feedback at the computational environment.

In some embodiments, said operator feedback is received in response to provided maintenance information and/or in response to a scheduled maintenance date. In some embodiments, said operator feedback regards other devices of the multitude of coordinate measuring devices than the first device. In some embodiments, said operator feedback comprises information about a result of a maintenance of a device of the multitude of coordinate measuring devices. In some embodiments, said operator feedback comprises information about a deviation from a scheduled maintenance appointment, such as a deviation from a scheduled time or kind of the maintenance appointment. According to one embodiment, performing the maintenance analysis also involves considering the operator feedback.

According to some embodiments of the method, the one or more algorithms use artificial intelligence (AI) to perform the maintenance analysis, particularly wherein the one or more algorithms use at least one of Unsupervised Machine Learning, Supervised Machine Learning, Deep Learning or Reinforcement Learning.

According to some embodiments of the method, the maintenance analysis comprises correlating the maintenance data with the components used in the respective coordinate measuring devices and with the usage-related data of the respective coordinate measuring devices.

According to some embodiments of the method, the maintenance analysis comprises a statistical analysis of the maintenance events, the used components and the usage-related data. For instance, the statistical analysis may comprise at least one of segmentation, clustering and anomaly detection.

According to some embodiments of the method, the usage-related data comprises individual usage information for a plurality of components of the respective coordinate measuring device, the individual usage information comprising at least information about an age of the respective component, and a duration and/or intensity of use of the respective component.

According to some embodiments of the method, the maintenance analysis is performed for each component of the first coordinate measuring device individually.

According to some embodiments of the method, the usage-related data comprises information about environmental stresses to which each of the multitude of coordinate measuring devices and/or at least one of its components has been exposed during use or during transport. The environmental stresses for instance comprise heat, frost, moisture, dust, vibrations, shocks, corrosives, radiation and/or atmospheric pressure.

According to some embodiments of the method, the plurality of components comprise at least one of actuators, joints and gears. According to some embodiments of the method, the plurality of components comprise wear parts, and the usage-related data comprises information about individual wear of the wear parts. According to some embodiments of the method, the plurality of components comprise wear parts that comprise at least one of actuators, joints and gears.

According to some embodiments of the method, the first coordinate measuring device is a laser-based metrology device, such as a laser tracker, a laser scanner or a total station, and the plurality of components comprise at least one of optical sensors and laser sources.

According to some embodiments of the method, the information of each individual digital twin about the individual components of the respective coordinate measuring device is continuously updated based on the received usage-related data and the received maintenance data. According to some embodiments of the method, the information of each individual digital twin about the individual components of the respective coordinate measuring device comprises, for each individual component, at least one of a lot number, a manufacturer, and a manufacturing date.

A second aspect of the invention pertains to a computer system for determining maintenance requirements of a first coordinate measuring device. The computer system comprises one or more server computers, wherein the one or more server computers comprise memory for storing a digital-twin database, which comprises individual digital twins for a multitude of coordinate measuring devices including the first coordinate measuring device, each individual digital twin comprising information about the respective individual coordinate measuring device. Moreover, according to this aspect of the invention the computer system is configured to perform a method according to the first aspect of the invention.

A third aspect of the invention pertains to a computer programme product comprising programme code which is stored on a machine-readable medium, or being embodied by an electromagnetic wave comprising a programme code segment, and having computer-executable instructions for performing, in particular when run on a computer system according to the second aspect, the method according to the first aspect of the invention.

The invention in the following will be described in detail by referring to exemplary embodiments that are accompanied by figures, in which:
- Fig. 1: shows a location with an exemplary set of coordinate measuring devices;
- Fig. 2: shows a server computer as part of an exemplary embodiment of a computer system according to the invention;
- Fig. 3: shows an exemplary coordinate measuring device comprising a plurality of different components;
- Fig. 4: shows a flow chart illustrating an exemplary embodiment of a method according to the invention; and
- Fig. 5: illustrates the flow of data for performing a maintenance analysis as a part of an exemplary embodiment of a method according to the invention.

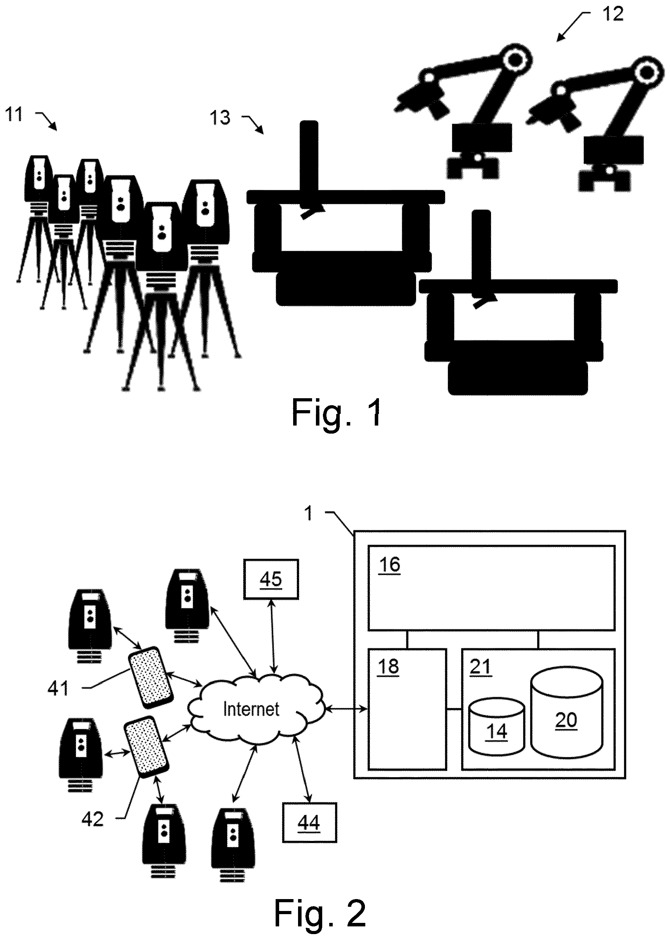

Figure 1 shows an exemplary set 10 ("fleet") of different coordinate measuring devices 11, 12, 13. For instance, the fleet 10 may be located at a production facility or similar site where the devices are used e.g. for monitoring production processes or measuring produced workpieces for quality assurance. Alternatively, the fleet 10 may be located at a storage of a rental shop where the devices 11, 12, 13 are leased to end customers. Also, the devices of the fleet 10 may be provided at several different locations, spatially distributed over a large area. In the shown example, the fleet 10 comprises laser trackers 11, portable articulated arm CMMs 12 and stationary CMMs 13. The fleet 10 however may comprise also other kinds of coordinate measuring devices, e.g. reality capture devices, laser scanners or total stations as well as unmanned aerial or ground vehicles (UAV/UGV) comprising coordinate measuring equipment. Data relating to a multitude of such coordinate measuring devices - of one fleet or a multitude of fleets - may be gathered and used to determine individual maintenance requirements of one or more of the devices.

Figure 2 shows an exemplary server computer 1 as a part of a computational environment, e.g. as a part of an exemplary embodiment of a computer system according to the invention. The depicted server computer 1 comprises a processor 16, a communication unit 18 and a memory 21 that are operatively coupled with each other.

The memory 21 has stored a digital-twin database 20. The digital-twin database 20 comprises individual digital twins for a multitude of individual coordinate measuring devices. Each individual digital twin comprises individual information about the respective individual coordinate measuring device.

The communication unit 18 is configured to establish remote data connections via the Internet, e.g. with the coordinate measuring devices of the fleet or with mobile devices 41, 42, e.g. smartphones, of registered users of these devices. Optionally, a remote data connection between the communication unit 18 and a coordinate measuring device may be established via one of the remote devices 41, 42. Remote data connections may be established via the Internet also with one or more maintenance service providers 44, 45.

Optionally, an application programme ("app") may be provided to be downloaded and installed on the mobile devices 41, 42 that allows registering and data traffic. For instance, the app may be provided for download in the memory 21 (not shown here). The app may also allow providing, by the operator, information about a condition of the device or about circumstances of a measuring process to the server computer 1 or providing operator feedback in response to provided maintenance suggestions.

According to the illustrative embodiment shown here, the server computer 1 - either on its own or in combination with other server computers of a computer system - is configured:
- to provide the digital-twin database 20 comprising individual digital twins for each of a multitude of coordinate measuring devices, wherein each individual digital twin comprises information about individual components of the respective coordinate measuring device;
- to continuously receive usage-related data regarding a usage of the multitude of coordinate measuring devices;
- to receive maintenance data related to maintenance events of the coordinate measuring devices;
- to use the algorithm 14 to perform a maintenance analysis involving the maintenance data, the information about the components and the usage-related data;
- to predict, based on a result of the maintenance analysis, maintenance requirements for one or more of the coordinate measuring devices;
- to provide maintenance information regarding the predicted maintenance requirements to the respective coordinate measuring device, to mobile device 41, 42 of an operator or to a maintenance service provider 44, 45, and/or to automatically schedule a maintenance appointment.

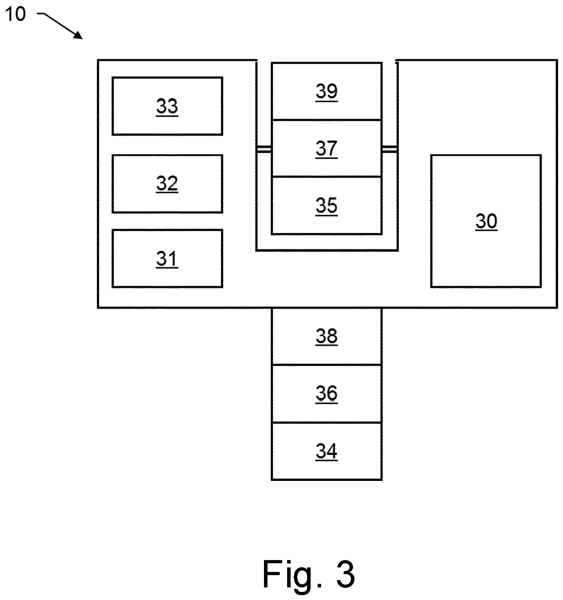

Figure 3 schematically shows an exemplary embodiment of a first coordinate measuring device 10, for instance embodied as a laser tracker as disclosed in EP 2 980 526 B1. The depicted laser tracker 10 comprises a support, which is fastened on a base (not shown here) so that it is rotatable about a first axis of rotation. A beam deflection unit is fastened to the support so that it is rotatable about a second axis of rotation.

The device 10 comprises a laser module 30 for generating a laser beam as measurement radiation of the laser tracker, for instance a helium-neon laser furnace. The device 10 further comprises a number of optical sensors 31, 32, 33. In the shown example, these components 30-33 are provided in the support, however, some or all may as well be provided in the beam deflection unit.

To allow rotation about the first and second axes of rotation, the device comprises two sets of actuators 34, 35, joints 36, 37 and gears 38, 39. These components 34-39 may be considered as wear parts that need maintenance on a regular basis or based on the use of the respective device 10.

For instance, the optical sensors may comprise an optical distance measuring sensor 31 for determining a distance to a target based on returned measurement radiation, a measurement camera 32 for capturing a spatial alignment of a target and a localization camera 33 for coarse localization of the target.

The coordinate measuring device 10 may comprise further components not shown here, such as inclination sensors or a meteorology station having sensors for ascertaining a temperature, a pressure, and/or a humidity of ambient air.

The device may be configured monitor the usage of its components individually and provide information about the individual usage, e.g. to the server computer of Figure 2. Alternatively, the device may be configured monitor a general usage and provide information about the overall usage, from which information the individual usage or wear of at least some of the components may be derived. For instance, if the device has monitored its general usage and provides information that it has performed many slow movements about the first axis and fewer but faster movements about the second axis, a different usage and wear of each of the two sets of actuators 34, 35, joints 36, 37 and gears 38, 39 may be derived from this information.

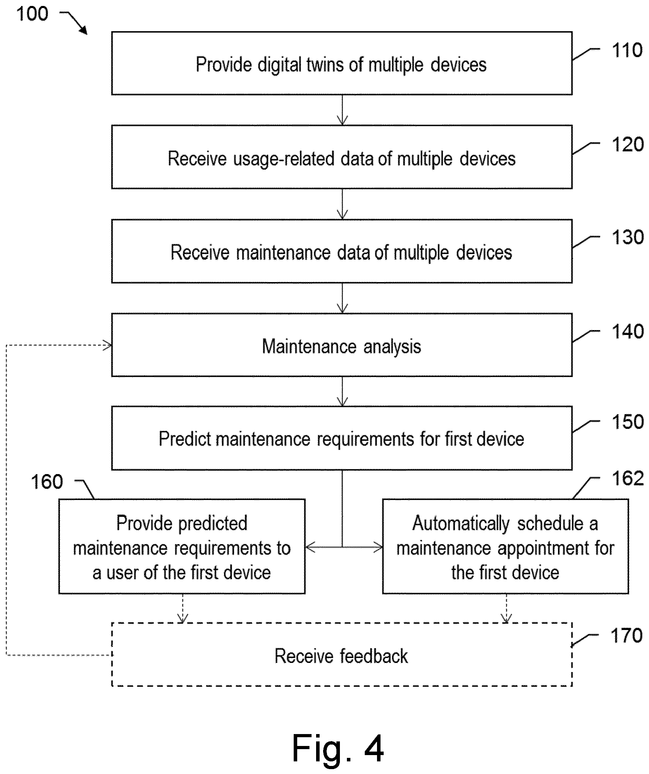

Figure 4 shows a flow chart illustrating an exemplary embodiment of a computer-implemented method 100 according to the invention.

The method starts with providing 110 a digital-twin database in a computational environment, e.g. on a server computer as shown in Figure 2. The computational environment may comprise one or more server computers or a cloud-computing environment. For instance, the computational environment and/or the digital-twin database can be provided by a manufacturer of the coordinate measuring devices.

The database comprises an individual digital twin for each individual coordinate measuring device of a multitude of devices. Each individual digital twin comprises information about the respective individual coordinate measuring device, for instance about individual components of the respective individual coordinate measuring device, such as information about a lot number, a manufacturer and/or a manufacturing date of each individual component. Additionally, the stored data of each individual twin may comprise additional information such as information about a registered owner or user, past usage, a predicted demand for maintenance, and activated or activatable features of the device.

Usage-related data of multiple coordinate measuring devices is received 120 at the computational environment. The usage-related data is generally related to a usage of the devices, particularly a direct usage in coordinate measuring applications. Additionally, the usage-related data may comprise data that is indirectly related to measuring applications, e.g. a transport between two measuring sites. The usage-related data may comprise a usage history of the respective device that comprises information about all past measuring operations of the device including a duration and intensity of the use of the device, either for each operation separately or as a combined value for all operations. Some of the usage-related data may be provided by the user, for instance as input in an app installed on a mobile device (as described with respect to Figure 2) . Some of the usage-related data may be provided by the respective device itself. The data may be directly measured by sensors of the device - for instance, a revolution speed sensor may directly measure rotations, a GNSS sensor may determine a position. Alternatively or additionally, the data may be derived based on the performed measurement tasks, e.g. based on the task data or on the resulting measurement data.

The usage-related data may comprise individual usage information for a plurality of components of the respective coordinate measuring device, for instance about a total age and the usage history of the respective component. Some of the components may be wear parts. In this case, the usage-related data may comprise information about an individual - measured or estimated - wear of the wear parts.

The usage-related data may also comprise further information, for instance about environmental stresses to which each coordinate measuring device - or each component - has been exposed during use or during transport. These stresses may comprise potentially damaging environmental influences such as heat, frost, moisture, dust, vibrations, shocks, corrosives, radiation and high or low atmospheric pressure.

If the device comprises sensors for capturing the further information, the information may be provided directly by the device. For instance, EP 2 980 526 B1 discloses a laser tracker having a meteorology station with sensors for ascertaining a temperature, a pressure, and/or a humidity of ambient air. Alternatively or additionally, the further information may be provided by an operator of the device. For instance, the operator may fill out a questionnaire for each measurement operation, e.g. provided in an app installed on a mobile device (as described with respect to Figure 2). The information may be provided directly, e.g. by explicitly giving an ambient temperature, or indirectly, e.g. as a position, date and time of a measurement operation, so that the information may be derived. For instance an ambient temperature may be derived from a weather report.

Maintenance data of the multiple coordinate measuring devices is received 130 at the computational environment. The maintenance data is generally related to maintenance events of the coordinate measuring devices. Maintenance events include all maintenance, service or repair operations that have been performed on a device. These include planned, periodic and routine maintenance as well as unscheduled performance-based or condition-based maintenance. The maintenance data may comprise the reasons for the maintenance, e.g. whether the maintenance was a planned annual maintenance or due to a problem with a certain component or functionality. Also, the maintenance data may comprise a result of the maintenance, e.g. a determined condition of the individual components of the device, whether components have been replaced, repaired or serviced, or whether a certain component has been determined to be the cause for a problem.

Based on the information about the multitude of coordinate measuring devices that has been provided 110 by the digital twins (especially the information about the individual components), received 120 as usage-related data and received 130 as maintenance data, a maintenance analysis 140 can be performed. Preferably, the maintenance analysis 140 is performed on a component-basis, i.e. for each component of the multitude of coordinate measuring devices - or at least for each component of a device of interest ("first device") - individually.

One or more algorithms may be involved in the maintenance analysis 140, for instance using artificial intelligence. The algorithms may use machine-learning techniques such as Unsupervised Machine Learning, Supervised Machine Learning, Deep Learning or Reinforcement Learning.

The maintenance analysis 140 may comprise correlating the maintenance data with the components used in the respective coordinate measuring devices and with the usage-related data of the respective coordinate measuring devices. A statistical analysis of the maintenance events, the used components and the usage-related data may be performed as part of the maintenance analysis 140. For instance, the statistical analysis may comprise segmentation, clustering and/or anomaly detection.

Based on a result of the maintenance analysis 140, maintenance requirements for the first coordinate measuring device are predicted 150, for instance using one or more algorithms already involved in the maintenance analysis 140. Optionally, this may include predicting 150 maintenance events based on adjusted maintenance intervals. These adjusted maintenance intervals can be generated by adjusting the components' specified maintenance intervals, which may be provided by each digital twin. The adjustment can be based on the predicted maintenance requirements and/or on the result of the maintenance analysis.

The prediction 150 of the maintenance requirements of a device may also comprise weighing up the costs of additional maintenance and the costs of deterioration of the measurement performance, e.g. a lower measurement accuracy if maintenance would be postponed.

As a next step, maintenance information regarding the predicted maintenance requirements of a device is automatically provided 160 to the device or to its operator (e.g. to a mobile device of a registered or assigned operator). Alternatively or additionally, the information may be provided 160 to a maintenance service provider that is responsible for the device.

Alternatively or additionally, based on the predicted maintenance requirements, a maintenance appointment for the device can be automatically scheduled 162 with a maintenance service provider.

Optionally, the method 100 may further comprise receiving 170 feedback, particularly from an operator or maintenance service provider. For instance, said feedback may be received 170 in response to the provided maintenance information or in response to a scheduled maintenance date. It may comprise information about a maintenance result or about a deviation from a scheduled maintenance appointment, e.g. a deviation from a scheduled time or kind of the maintenance appointment.

Feedback regarding a multitude of coordinate measuring devices may be received 170 and used as input for performing and improving the maintenance analysis 140. For instance, if the result of a maintenance scheduled by the system is that the components are not as worn as predicted, this result can be used for further predictions.

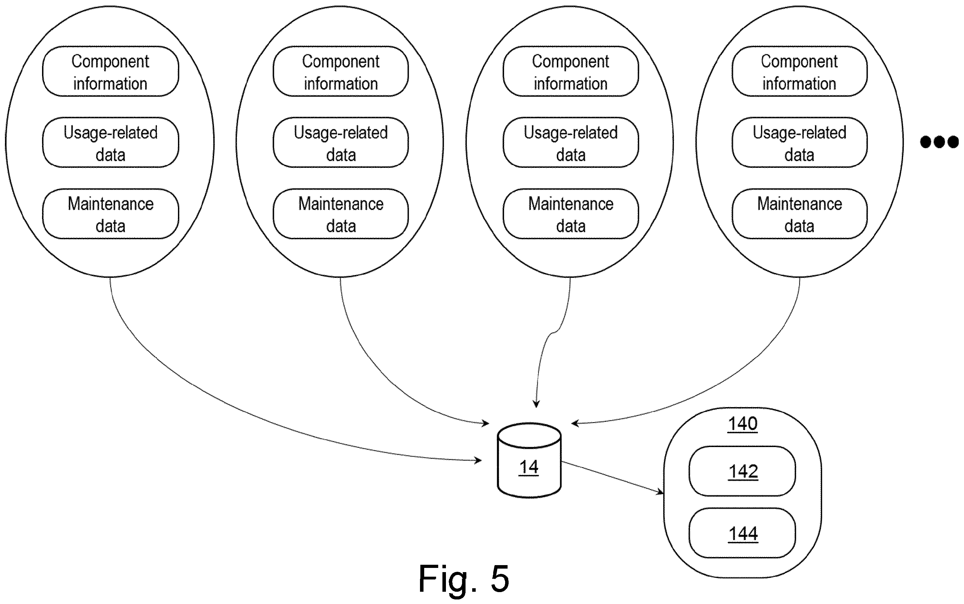

Figure 5 illustrates an exemplary flow of data for performing a maintenance analysis 140 of an exemplary method for determining maintenance requirements. Component information, usage-related data and maintenance data, each related to a certain individual device of a multitude of coordinate measuring devices, particularly from more than one device fleets, are provided to an algorithm 14 performing the maintenance analysis 140.

The maintenance analysis 140 comprises a correlation 142 of the individual data of each of the coordinate measuring devices, i.e. of the individual maintenance data of a device with the information about the components of the same device and with the usage-related data of the same device.

Additionally, the maintenance analysis 140 comprises a statistical analysis 144 regarding the maintenance events, the used components and the usage-related data. The statistical analysis may comprise at least one of segmentation, clustering and anomaly detection. The statistical analysis allows determining statistical correlations, for instance between certain uses, certain usage circumstances, certain component kinds and certain component failures. This allows for precise maintenance requirement predictions for devices having the same components and having been used the same way under similar circumstances, i.e. early enough before the same component failures occur.

For instance, if a statistical connection can be detected between a certain use of an optical sensor or a rotation gear in coordinate measuring devices under certain environmental conditions (e.g. constant exposure of the sensor to direct sunlight or few but fast rotations of the gear in cold temperatures) and certain results in maintenance reports (e.g. early defects due to premature wear), this connection can be used for determining individual maintenance requirements for another coordinate measuring device having the same sensor or rotation gear and working under similar conditions.

Although the invention is illustrated above, partly with reference to some preferred embodiments, it must be understood that numerous modifications and combinations of different features of the embodiments can be made. All of these modifications lie within the scope of the appended claims. In particular, the described system may be configured to execute some or all of the described method steps, and the described method may utilize some or all of the described system components.

## Claims

1. Computer-implemented method (100) for determining maintenance requirements of a first coordinate measuring device (10), the method comprising, in a computational environment:
- providing (110) a digital-twin database (20) comprising individual digital twins for each of a multitude of coordinate measuring devices (10-13) including the first coordinate measuring device (10), each coordinate measuring device (10-13) comprising a plurality of components (30-39), each individual digital twin comprising information about the individual components (30-39) of the respective coordinate measuring device (10-13);
- continuously receiving (120) usage-related data regarding a usage of the multitude of coordinate measuring devices (10-13), particularly a usage in coordinate measuring applications;
- receiving (130) maintenance data related to maintenance events of the coordinate measuring devices;
- using one or more algorithms (14) to perform a maintenance analysis (140) involving the maintenance data of at least a subset of the multitude of coordinate measuring devices (10-13), the information about the components (30-39) used in the coordinate measuring devices (10-13) of the subset and the usage-related data of the coordinate measuring devices (10-13) of the subset; and
- predicting (150), based on a result of the maintenance analysis (140), maintenance requirements for the first coordinate measuring device (10),
wherein
- maintenance information regarding the predicted maintenance requirements is automatically provided (160) to the first coordinate measuring device (10), to a mobile device of an operator assigned to the first coordinate measuring device (10), and/or to a maintenance service provider; and/or
- a maintenance appointment for the first coordinate measuring device (10) is automatically scheduled (162) based on the predicted maintenance requirements.

2. Method (100) according to claim 1, wherein
- each digital twin comprises information about specified maintenance intervals of the plurality of components (30-39) of the respective coordinate measuring device; and
- the method further comprises generating adjusted maintenance intervals for one or more of the plurality of components (30-39) of the first coordinate measuring device (10) by adjusting the specified maintenance intervals of the respective one or more components (30-39) based on the predicted maintenance requirements and/or on the result of the maintenance analysis (140),
particularly wherein predicting (150) the maintenance requirements comprises predicting maintenance events based on the adjusted maintenance intervals.

3. Method (100) according to claim 2, wherein generating an adjusted maintenance interval of a first component comprises adjusting, in the digital twins of all coordinate measuring devices (10-13) that comprise the first component, the specified maintenance interval of the first component.

4. Method (100) according to any one of the preceding claims, comprising receiving (170) operator feedback at the computational environment, particularly wherein the operator feedback
- is received (170) in response to provided (160) maintenance information and/or in response to a scheduled (162) maintenance date;
- includes operator feedback regarding other devices of the multitude of coordinate measuring devices than the first device;
- comprises information about a result of a maintenance of a device of the multitude of coordinate measuring devices; and/or
- comprises information about a deviation from a scheduled maintenance appointment, particularly a deviation from a scheduled time or kind of the maintenance appointment.

5. Method (100) according to claim 4, wherein performing the maintenance analysis (140) also involves considering the operator feedback.

6. Method (100) according to any one of the preceding claims, wherein the one or more algorithms (14) use artificial intelligence to perform the maintenance analysis (140), particularly wherein the one or more algorithms (14) use at least one of Unsupervised Machine Learning, Supervised Machine Learning, Deep Learning or Reinforcement Learning.

7. Method (100) according to any one of the preceding claims, wherein the maintenance analysis (140) comprises correlating (142) the maintenance data with the components (30-39) used in the respective coordinate measuring devices (10-13) and with the usage-related data of the respective coordinate measuring devices (10-13).

8. Method (100) according to any one of the preceding claims, wherein the maintenance analysis (140) comprises a statistical analysis (144) of the maintenance events, the used components (30-39) and the usage-related data, particularly wherein the statistical analysis comprises at least one of segmentation, clustering and anomaly detection.

9. Method (100) according to any one of the preceding claims, wherein
- the usage-related data comprises individual usage information for a plurality of components (30-39) of the respective coordinate measuring device, the individual usage information comprising at least information about an age of the respective component, and a duration and/or intensity of use of the respective component (30-39); and/or
- the maintenance analysis (140) is performed for each component (30-39) of the first coordinate measuring device (10) individually.

10. Method (100) according to any one of the preceding claims, wherein the usage-related data comprises information about environmental stresses to which each of the multitude of coordinate measuring devices (10-13) and/or at least one of its components (30-39) has been exposed during use or during transport, particularly wherein the environmental stresses comprise at least one of heat, frost, moisture, dust, vibrations, shocks, corrosives, radiation and atmospheric pressure.

11. Method (100) according to any one of the preceding claims, wherein the plurality of components (30-39) comprise
- at least one of actuators (34, 35), joints (36, 37) and gears (38, 39); and/or
- wear parts, wherein the usage-related data comprises information about individual wear of the wear parts,
particularly wherein the plurality of components comprise wear parts that comprise at least one of actuators, joints and gears.

12. Method (100) according to any one of the preceding claims, wherein
- the first coordinate measuring device (10) is a laser-based metrology device, particularly a laser tracker, a laser scanner or a total station; and
- the plurality of components comprise at least one of optical sensors (31-33) and laser sources (30).

13. Method (100) according any one of the preceding claims, wherein the information of each individual digital twin about the individual components (30-39) of the respective coordinate measuring device
- is continuously updated based on the received usage-related data and the received maintenance data; and/or
- comprises, for each individual component (30-39), at least one of a lot number, a manufacturer, and a manufacturing date.

14. Computer system for determining maintenance requirements of a first coordinate measuring device, the system comprising one or more server computers (1), wherein the one or more server computers comprise memory (21) for storing a digital-twin database (20), the digital-twin database comprising individual digital twins for a multitude of coordinate measuring devices (10-13) including the first coordinate measuring device, each individual digital twin comprising information about the respective individual coordinate measuring device, wherein the computer system is configured to perform the method (100) of any one of the preceding claims.

15. Computer programme product comprising programme code which is stored on a machine-readable medium, or being embodied by an electromagnetic wave comprising a programme code segment, and having computer-executable instructions for performing, in particular when run on a computer system according to claim 14, the method (100) according to any one of claims 1 to 13.
